Europäisches Patentamt

**European Patent Office**

**Office européen des brevets**

(11) Numéro de publication : **0 008 981**
**B1**

# FASCICULE DE BREVET EUROPÉEN

(45) Date de publication du fascicule du brevet :
**03.08.83**

(21) Numéro de dépôt : **79400595.9**

(22) Date de dépôt : **29.08.79**

(51) Int. Cl.³ : **B 25 J 11/00**, B 25 J 5/00,
F 16 H 35/00, F 16 H 19/00

(54) **Manipulateur motorisé.**

(30) Priorité : **04.09.78 FR 7825413**

(43) Date de publication de la demande :
**19.03.80 Bulletin 80/06**

(45) Mention de la délivrance du brevet :
**03.08.83 Bulletin 83/31**

(84) Etats contractants désignés :
**BE CH DE GB IT**

(56) Documents cités :
**FR A 2 061 940**
**FR A 2 061 941**
**FR A 2 086 976**
**FR A 2 150 635**
**FR A 2 278 457**
**US A 3 268 092**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Vertut, Jean
3, rue J.E. Voisembert
F-92130 Issy-les-Moulineaux (FR)**

(74) Mandataire : **Mongrédien, André et al
c/o BREVATOME 25, rue de Ponthieu
F-75008 Paris (FR)**

Jouve, 18, rue St-Denis, 75001 Paris, France

# Manipulateur motorisé

La présente invention a pour objet un manipulateur motorisé.

On connaît de nombreux manipulateurs articulés motorisés généralement utilisés à partir d'un support, qui sont, soit suspendus à un pont roulant, soit portés par un véhicule en appui sur le sol, devenant ainsi autonomes. A titre d'exemple, on citera le manipulateur décrit dans le brevet US-A-3 268 092, qui concerne en fait une structure de supportage pour un manipulateur classique comportant ses propres moteurs.

Généralement, ces manipulateurs comportent deux segments articulés portant à leur extrémité une pince ou plus généralement un outil. Ces deux segments sont en général respectivement appelés « bras » et « avant-bras ». L'ensemble comporte les six degrés de liberté permettant de positionner et d'orienter un objet tenu par la pince en toutes positions et toutes orientations dans les limites des possibilités de déplacement du manipulateur. A cette fin, ces manipulateurs comportent généralement une rotation de l'avant-bras autour de son axe propre et l'articulation du poignet, c'est-à-dire que l'articulation entre l'avant-bras et l'outil, apporte les deux rotations complémentaires. Ces trois mouvements de rotations constituent essentiellement les degrés de liberté d'orientation de l'outil, les mouvements de coude, c'est-à-dire autour de l'articulation entre le bras et l'avant-bras, le mouvement d'épaule ; c'est-à-dire l'articulation entre le bras et le support et le mouvement de rotation de l'ensemble de télémanipulateur constituent généralement les degrés de liberté de position. Cet arrangement présente un inconvénient lorsqu'il s'agit de placer le poignet portant l'outil dans des zones comportant d'importants obstacles s'opposant à la progression de l'outil. En effet, pour que les degrés de liberté d'orientation soient peu liés aux degrés de liberté en position, le dernier bras de levier, en l'occurrence le bras de levier de la pince, doit avoir une faible longueur par rapport à la longueur des précédents segments constituant le bras et l'avant-bras. Il en résulte que le long segment constitué par l'avant-bras limite l'approche de la pince ou de l'outil dans des zones encombrées. Ces obstacles occasionnant en quelque sorte des ombres dans lesquelles l'outil ne peut aller.

Par ailleurs, les manipulateurs peuvent être l'objet d'une commande utilisant un calculateur et permettant de résoudre en coordonnées cartésiennes les positions du manipulateur selon ses propres degrés de liberté et réciproquement de résoudre les coordonnées cartésiennes de la pince. Il en résulte un calcul complexe nécessitant l'inversion de plusieurs matrices car il y a couplage entre les mouvements d'orientation de la pince ou de l'outil et les mouvements de position du manipulateur. Il arrive même dans la disposition classique, où l'axe d'articulation du poignet est déporté par rapport à l'axe de l'avant-bras, que ce changement de coordonnées soit spécialement complexe et nécessite un calcul par itérations effectué par le calculateur.

Le manipulateur selon l'invention permet de découpler les mouvements d'orientation des mouvements de position. On comprend qu'il simplifie ainsi considérablement sa commande par calculateur.

On connaît aussi un manipulateur motorisé à commande par câbles (brevet FR-A-2 278 457), un manipulateur équipé de moyens pour maintenir un angle constant et réglable entre deux de leurs segments (brevet FR-A-2 061 941) et un dispositif d'équilibrage à ressorts pour un manipulateur (brevet FR-A-2 086 976).

Enfin on connaît de nombreux manipulateurs généralement à usage industriel, reposant directement au sol par leur socle. Le manipulateur objet de l'invention permet de réaliser directement cet appui au sol avec une mobilité importante, ce qui accroît très sensiblement sa zone d'intervention, le manipulateur devenant ainsi autonome et ayant un champ d'action beaucoup plus important.

A cet effet et conformément à un premier aspect de l'invention, il est proposé un manipulateur motorisé comprenant un corps, un fût mobile en rotation autour de son axe longitudinal par rapport audit corps, un bras supérieur articulé à l'extrémité du fût autour d'un axe d'épaule orthogonal à l'axe longitudinal du fût et à l'axe longitudinal du bras, un avant-bras articulé autour d'un troisième axe parallèle à l'axe d'épaule, ledit avant-bras étant susceptible de tourner autour de son axe longitudinal, un outil présentant un axe longitudinal, monté pivotant à l'extrémité dudit avant-bras autour d'un axe normal au plan défini par les axes longitudinaux dudit avant-bras et dudit outil, ledit outil étant susceptible de tourner autour de son axe longitudinal, et une pluralité de moteurs solidaires dudit corps et de moyens de transmission par câbles et poulies pour transmettre les mouvements de commande des moteurs aux éléments mobiles correspondants du manipulateur, caractérisé en ce qu'il comprend de plus un bras intermédiaire articulé directement à l'extrémité du bras supérieur autour d'un axe de coude parallèle à l'axe d'épaule, l'avant-bras étant articulé à l'extrémité du bras intermédiaire et en ce que le corps est monté sur des roues et comprend un moteur d'entraînement en rotation du fût par rapport au corps autour de son axe longitudinal et des moyens de transmission pour coupler la rotation dudit fût avec la rotation desdites roues autour de leurs axes de pivotement verticaux, de telle façon que la direction commune prise par lesdites roues soit confondue avec la projection sur le plan de déplacement du manipulateur de la direction de l'axe longitudinal du bras.

Selon une autre caractéristique de l'invention, les moyens de transmission par câbles et poulies comprennent des moyens pour maintenir l'axe longitudinal de l'avant-bras parallèle à l'axe longitudinal du fût ou des moyens pour donner à l'angle défini entre ces axes une valeur réglable donnée. Grâce à cette caractéristique, on comprend que, dans l'optique d'une commande du manipulateur par un calculateur, la position de l'axe de rotation de la pince par rapport à l'avant-bras ne dépend que des rotations simples du fût, du bras supérieur et du bras intermédiaire, comme si l'avant-bras n'existait pas. Toutefois, ce dernier améliore les possibilités pour atteindre un objet, en dépit des obstacles qui peuvent se présenter.

Selon une autre caractéristique de l'invention le manipulateur peut comporter des moyens d'équilibrage consistant en un premier ressort dont une première extrémité est solidaire d'un levier pivotant autour de l'axe d'épaule et assujetti à rester parallèle à l'axe longitudinal du bras intermédiaire et dont l'autre extrémité est solidaire du fût, et un deuxième ressort dont une extrémité est solidaire d'un levier prolongeant l'axe longitudinal du bras supérieur et dont l'autre extrémité est solidaire du fût.

Conformément à un deuxième aspect de l'invention, il est également proposé un manipulateur motorisé comprenant un corps, un fût mobile en rotation autour de son axe longitudinal par rapport audit corps, un bras supérieur articulé à l'extrémité du fût autour d'un axe d'épaule orthogonal à l'axe longitudinal du fût et à l'axe longitudinal du bras, un avant-bras articulé autour d'un troisième axe parallèle à l'axe d'épaule, ledit avant-bras étant susceptible de tourner autour de son axe longitudinal, un outil présentant un axe longitudinal, monté pivotant à l'extrémité dudit avant-bras autour d'un axe normal au plan défini par les axes longitudinaux dudit avant-bras et dudit outil, ledit outil étant susceptible de tourner autour de son axe longitudinal, et une pluralité de moteurs solidaires dudit corps et de moyens de transmission par câbles et poulies pour transmettre les mouvements de commande des moteurs aux éléments mobiles correspondants du manipulateur, caractérisé en ce qu'il comprend de plus un bras intermédiaire articulé directement à l'extrémité du bras supérieur autour d'un axe de coude parallèle à l'axe d'épaule, l'avant-bras étant articulé à l'extrémité du bras intermédiaire et en ce qu'au moins le mouvement de rotation de l'avant-bras autour de son axe longitudinal et les mouvements de l'outil par rapport audit avant-bras sont commandés chacun par au moins un premier câble ou ruban passant sur des premières poulies de même diamètre montées respectivement sur l'axe d'épaule, l'axe de coude et le troisième axe, un ou deux câbles ou rubans antagonistes passant sur des deuxièmes poulies de même diamètre que les premières poulies et montées respectivement sur l'axe d'épaule, l'axe de coude et le troisième axe, le ou lesdits câbles ou rubans antagonistes étant montés en opposition par rapport au ou aux premiers câbles ou rubans de façon à équilibrer la tension de ces derniers et à maintenir l'angle formé entre l'axe longitudinal de l'avant-bras et l'axe du fût à une valeur donnée.

Dans un mode de réalisation préféré de l'invention, le ou les premiers câbles ou rubans sont fixés chacun à la partie mobile d'un moufle dont la partie fixe est solidaire du corps, l'extrémité libre du brin du moufle étant fixée sur un cabestan entraîné par un moteur.

De préférence, les moyens de mise en rotation du fût autour de son axe par rapport audit corps comprennent une poulie solidaire du corps et dont l'axe est confondu avec celui du fût, et deux brins antagonistes dont une extrémité est solidaire de ladite poulie, qui passent chacun sur un moufle, et dont l'autre extrémité est solidaire du moteur d'entraînement associé.

De toute façon, l'invention sera mieux comprise à la lecture de la description qui suit de plusieurs modes de réalisation de l'invention donnés à titre d'exemples non limitatifs. La description se réfère aux figures annexées sur lesquelles on a représenté :

sur la figure 1, une vue simplifiée du manipulateur montrant ses différents éléments, ainsi que les différentes possibilités du mouvement d'un élément par rapport aux autres ;

sur la figure 2, on a représenté la commande par chaîne, ruban ou câble du mouvement de rotation du bras par rapport au fût ;

sur la figure 3, une vue simplifiée de la commande de rotation du bras intermédiaire par rapport au bras supérieur ;

sur la figure 4, une vue du manipulateur montrant la commande de déplacement du bras inférieur ou avant-bras pour maintenir celui-ci parallèle au fût du manipulateur ;

sur la figure 5, une vue partielle montrant une variante de la commande de l'avant-bras ;

sur la figure 6, une vue montrant une variante de réalisation du manipulateur dans lequel les axes longitudinaux de l'avant-bras et du fût sont décalés par rapport aux axes de rotation du bras supérieur et de l'avant-bras ; la fig. 6' montrant une position extrême de l'avant-bras ;

sur la figure 7, une vue de la base du manipulateur montrant la liaison entre les moteurs d'entraînement et les câbles de réalisation des différents mouvements ;

sur la figure 8a, une vue de dessus de la base du manipulateur montrant l'implantation de l'ensemble des moteurs ;

sur la figure 8b, une vue de dessus de la base du manipulateur montrant une variante de celui-ci dans laquelle il existe une liaison entre le mouvement de rotation des roues de cette base et la rotation du fût du manipulateur ;

sur la figure 9, un exemple de réalisation de la commande de pivotement de l'avant-bras autour du troisième axe ;

sur la figure 10, un exemple de réalisation de l'équilibrage des éléments mobiles du manipulateur ; et,

sur les figures 11a et 11b une variante de réalisation de la commande de rotation du fût.

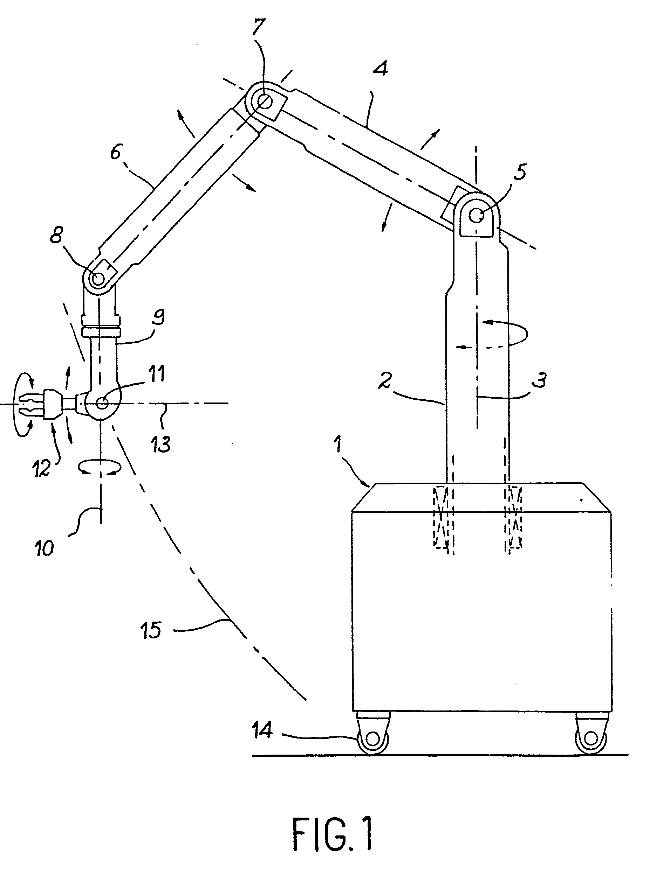

Sur la figure 1, on a représenté de façon simplifiée l'ensemble du manipulateur pour montrer les différents mouvements possibles et les différents éléments de ce manipulateur. On trouve tout d'abord un corps 1 servant de base au manipulateur et mobile par rapport au sol grâce à la présence de roues pivotantes 14. Sur ce corps 1 est monté pivotant autour de son axe longitudinal 3 un fût cylindrique 2. L'axe 3 est représenté ici vertical. Sur ce fût 2 est articulé un premier élément 4 qu'on appellera bras supérieur et qui peut pivoter par rapport au fût 2 autour d'un axe 5 perpendiculaire respectivement à l'axe longitudinal du bras supérieur 4 et à l'axe longitudinal du fût 2 et qui est appelé axe d'épaule. Sur la figure 1, ces trois axes ont été représentés concourants, mais il va de soi, comme on le verra ultérieurement, que cette disposition n'est pas nécessaire. A la deuxième extrémité du bras supérieur 4, est monté pivotant un deuxième segment ou bras intermédiaire 6 qui peut pivoter autour de l'axe 7. Cet axe 7 est perpendiculaire au plan défini par les axes longitudinaux respectivement du bras supérieur 4 et du bras intermédiaire 6 et est appelé axe de coude. A la deuxième extrémité du bras intermédiaire 6 est monté, pivotant, un troisième segment ou avant-bras 9 qui peut pivoter autour d'un axe 8 parallèle aux axes 5 et 7. Selon une disposition préférée de l'invention, l'avant-bras 9 est de longueur réduite et est doué d'un mouvement de rotation autour de son axe longitudinal 10, de telle façon que l'axe 10 reste en permanence parallèle à l'axe 3 du fût 2. Les moyens pour maintenir ce parallélisme seront explicités ultérieurement. A la deuxième extrémité de l'avant-bras 9 est montée une pince 12. Cette pince peut, d'une part, pivoter autour de l'axe 11 qui est disposé dans un plan perpendiculaire à l'axe 10 de l'avant-bras 9 et dans un plan perpendiculaire à l'axe longitudinal 13 de la pince 12. Enfin, la pince 12 peut pivoter autour de son axe longitudinal 13.

On a fait apparaître de plus sur cette figure la limite 15 atteinte par l'axe 11, dans la position maximale d'extension du bras supérieur 4 et du bras intermédiaire 6. On comprend par ailleurs aisément qu'en imprimant à l'avant-bras 9 un mouvement de rotation supplémentaire autour de l'axe 8, il est possible d'augmenter légèrement le champ représenté par les limites 15. On peut ainsi atteindre des zones encombrées où l'avant-bras 9 ne pourrait pas arriver, où, plus précisément, la pince 12 ne pourrait parvenir.

Une autre caractéristique essentielle du manipulateur réside dans le fait que la totalité des moteurs entraînant les différents mouvements des éléments articulés du manipulateur est située à l'intérieur du corps 1. Ces différents mouvements peuvent être au minimum un mouvement de rotation d'ensemble autour de l'axe 3 du fût 2, un mouvement d'épaule autour de l'axe 5, un mouvement de coude autour de l'axe 7, une rotation autour de l'axe 10 parallèle à l'axe 3 dans la disposition préférée, un mouvement d'élévation de la pince 12 autour de l'axe 11 et un mouvement de rotation de cette pince autour de son axe propre 13. Ces six mouvements qui correspondent à six degrés de liberté sont complétés par un septième qui correspond au serrage de la pince 12, mouvement qui est propre à tout manipulateur. Le manipulateur selon l'invention comporte des mouvements complémentaires ou auxiliaires comme l'éventuel mouvement de pivotement de l'avant-bras 9 autour de l'axe 8, le fonctionnement des roues telles que 14 et leur orientation, soit au total dix mouvements possibles, six degrés de liberté, le serrage de la pince et trois mouvements auxiliaires constituant des redondances.

Selon la forme préférée de réalisation de l'invention dans laquelle l'axe 10 reste parallèle à l'axe 3, on réduit les redondances aux six mouvements propres du manipulateur, et comme on le verra ultérieurement, la rotation d'ensemble autour de l'axe 3 dans une forme encore préférée de réalisation de l'invention, commande l'orientation des roues supprimant ainsi une deuxième redondance. Par ailleurs, lors de sa commande, la rotation des roues, c'est-à-dire la propulsion du corps 1 placé sur le sol, est commandée lorsque le manipulateur se trouve en fin de course d'extension de mouvement autour de l'axe de coude 7 dans le sens convenable de façon à ce qu'ainsi le déplacement du corps 1 ne soit commandé que lorsque le champ, par sa limite 15 ne permet pas d'atteindre un objet.

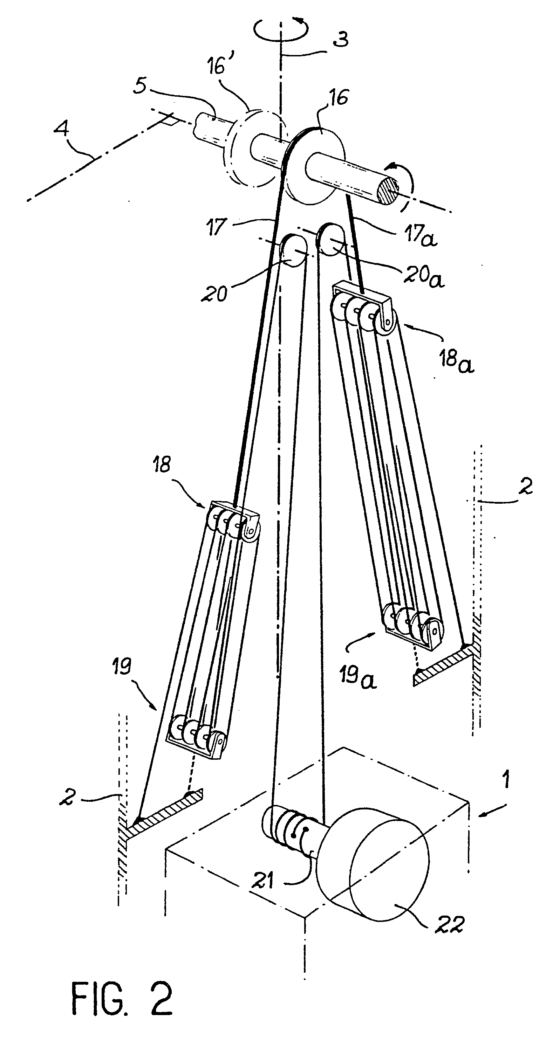

En se référant à la figure 2, on va décrire rapidement le mode de commande du bras supérieur 4. Ce mode de commande a déjà été décrit dans la demande de brevet N° EN 74 25055, n° de publication 2278457, déposée le 18 juillet 1974 au nom du demandeur « Manipulateur motorisé à câble ».

Le bras supérieur 4 est solidaire d'une poulie 16 montée sur l'axe d'épaule 5. Cette poulie est décalée par rapport à l'axe 3 du fût. La poulie 16 est entraînée en rotation à l'aide d'un moteur 22 solidaire du corps 1. Pour cela, deux brins antagonistes 17, 17a passent sur la poulie 16 et sont solidaires de la partie mobile 18 et 18a de deux moufles dont les parties fixes 19 et 19a sont solidaires du fût 2. Les deux brins antagonistes sortant des moufles sont fixés sur le cabestan 21 entraîné par le moteur 22 après être passés sur les poulies de renvoi 20 et 20a solidaires du fût 2. Ces deux poulies ont pour but de ramener les brins à proximité de l'axe 3 du fût 2. On comprend qu'ainsi le moteur 22 entraîne la mise en rotation de la poulie 16 et donc du bras 4.

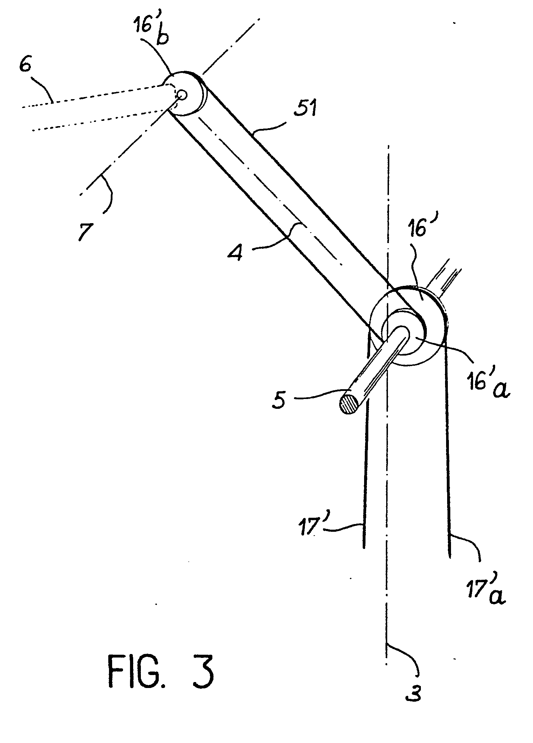

Sur la figure 3 on a représenté schématiquement la commande de la mise en rotation du bras intermédiaire 6 par rapport au bras supérieur 4. Pour cela, une poulie 16' montée sur l'axe 5 est disposée de façon symétrique de la poulie 16 par rapport à l'axe 3. La poulie 16' est entraînée comme la poulie 16 par des brins antagonistes 17' et 17'a entraînés par un moteur 22' et un cabestan 21' (non représentés). Une poulie 16'a, solidaire de la poulie 16' coopère avec une poulie 16'b montée pivotante sur l'axe 7 de coude et

solidaire du bras intermédiaire 6. Un câble 51 transmet à la poulie 16'b les déplacements de la poulie 16'a.

Il faut noter en se référant à la figure 2, qu'à la sortie des moufles, les câbles d'entraînement passent sur des poulies de renvoi 20 et 20a dont les axes sont solidaires du fût 2, ces poulies ayant pour but de ramener les brins sortant jusqu'au cabestan 21, le plus près possible de l'axe 3 de pivotement du fût. En effet, comme on l'a déjà rappelé, le cabestan 21 ou plus précisément le moteur 22 est solidaire du corps 1. En ramenant les brins sortant le plus près possible de l'axe 3 du fût, on facilite la torsion de la nappe des câbles lors de la rotation du fût avec une variation réduite de longueur des chemins de câbles faisant varier leur tension de façon acceptable.

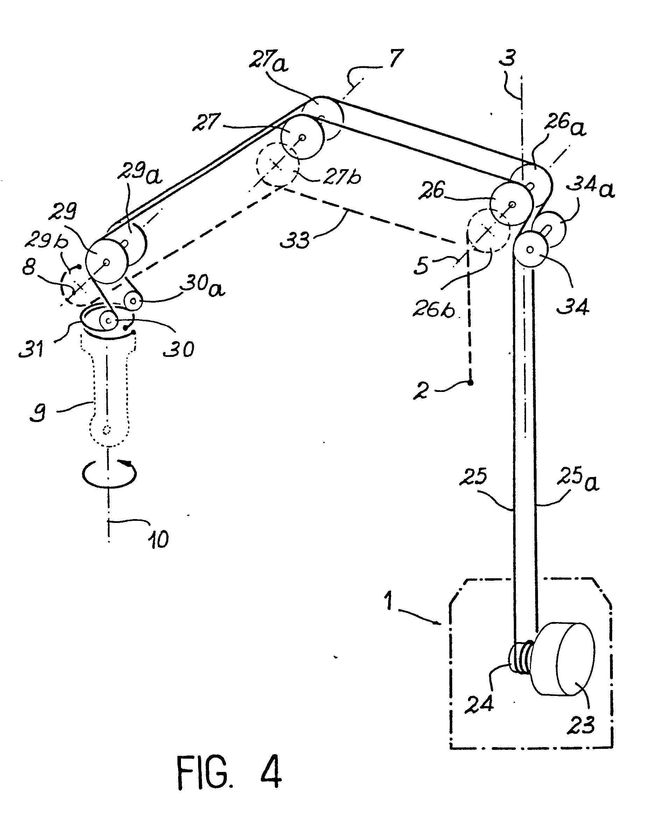

Sur la figure 4 on a représenté la commande de la rotation de l'avant-bras 9 autour de son axe longitudinal 10. Ce mouvement est commandé par le moteur 23, solidaire du corps 1 sur l'arbre de sortie duquel est monté le cabestan 24. Deux brins antagonistes 25 et 25a sont solidaires de ce cabestan. Ils passent sur des poulies 26 et 26a montées pivotantes sur l'axe d'épaule 5, puis sur des poulies 27, 27a montées pivotantes sur l'axe de coude 7 et enfin, sur des poulies 29, 29a montées pivotantes sur le troisième axe 8, toutes ces poulies ayant le même diamètre. La partie supérieure du bras inférieur 9 est solidaire d'une poulie à axe confondu avec l'axe 10 et qui porte la référence 31. Des poulies 30 et 30a renvoient les brins antagonistes 25, 25a à leur sortie des poulies 29, 29a sur la poulie 31. En outre, des poulies 34, 34a disposées dans le fût 3 ramènent les brins 25 et 25a au voisinage de l'axe 3 du fût 2 lors de leur parcours entre le cabestan 24 et les poulies 26, 26a, pour les raisons déjà indiquées.

Des brins antagonistes semblables aux brins 25, 25a servent de la même façon pour commander la rotation de la pince 12 autour de l'axe 11 et la rotation de la pince autour de son axe propre 13. Ces dispositions étant par ailleurs bien connues (voir le brevet déjà cité) il est inutile de les décrire plus en détails. En conséquence, on voit qu'on a trois paires de brins antagonistes, ces six brins tendant à faire pivoter l'avant-bras 9 autour de l'axe 8 par leur tension propre. D'autre part, une paire de câbles antagonistes possède depuis son cabestan menant tel que 24 jusqu'à sa poulie menée telle que 31 une longueur libre de parcours sur les paires de poulies 26, 26a, 27, 27a, 29, 29a constante lors des déplacements relatifs opposés correspondant aux rotations des cabestans 24 et 31. Cette paire antagoniste se comporte donc vis-à-vis des axes 5, 7 et 8 comme des branches de longueur constante équivalente à des côtés de parallélogramme (dans le sens sur la traction uniquement). C'est pourquoi, selon une caractéristique de l'invention, un ou plusieurs brins antagonistes tels que 33 sont montés sur des poulies 26b, 27b, 29b égales entre elles (même diamètre) et semblables aux poulies 26, 27 et 29, ce brin 33 étant monté selon un parcours antagoniste vis-à-vis des brins 25, tels que ce ou ces brins 33 de longueur constante équilibrent les tensions des câbles tels que 25 et 25a et réalisent le maintien positif de l'axe 10 parallèlement à l'axe 3 en étant équivalents à une fermeture des parallélogrammes. On remarquera que les poulies telles que 27b destinées à ce câble 33, sont l'objet d'un enroulement supérieur à un demi-tour. Le câble, s'il y a lieu, passera dans une poulie comportant deux gorges et passera d'une gorge à l'autre de façon à éviter des frottements des deux brins du câble. Il en est de même pour la poulie 26b, au-delà de laquelle le brin 33 est fixé au fût 2. Ainsi l'avant-bras 9 reste parallèle au fût.

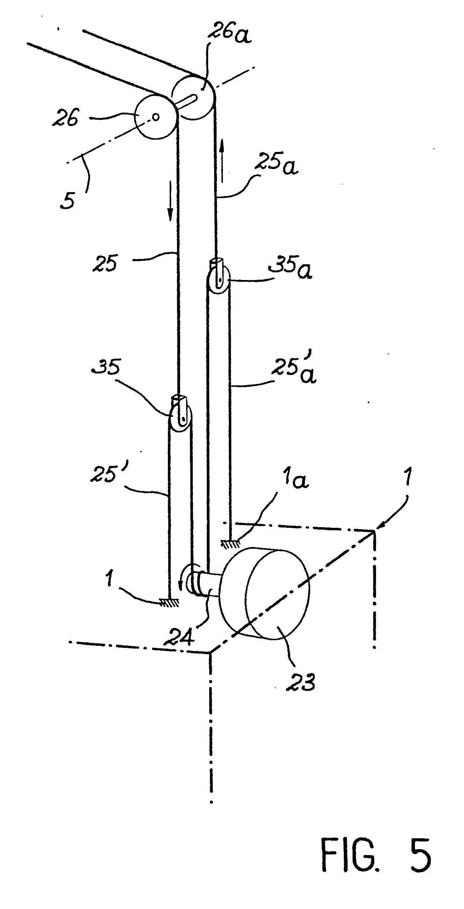

Sur la figure 5, on a représenté une vue partielle montrant une variante de réalisation de la commande des brins 25, 25a. Ces brins 25, 25a sont solidaires de la partie mobile 35, 35a de moufles multiplicateurs par deux. Ces moufles sont commandés par des brins antagonistes 25', 25'a qui passent sur le cabestan 24 et dont les autres extrémités sont solidaires du corps 1. Selon les caractéristiques du moteur, on peut réaliser ce montage avec des moufles multiplicateurs par un nombre entier convenable.

On remarque sur la figure 4, que dans l'exemple qui est décrit, aussi bien en ce qui concerne l'articulation d'épaule que les articulations de coude, les trois axes intéressés par chaque articulation sont concourants. Pour l'articulation d'épaule, il s'agit de l'axe de pivotement 5, de l'axe longitudinal 3 du fût et de l'axe longitudinal du bras supérieur 4. Pour l'articulation de poignet, il s'agit de l'axe de pivotement 8, de l'axe longitudinal du bras intermédiaire et de l'axe 10 de l'avant-bras 9. Il en résulte dans le cas préféré où l'axe 10 est maintenu parallèle à l'axe 3, que le point d'attache 11 de la pince 12 est bien à une distance de l'axe 3 égale à la projection sur un plan horizontal des segments 4 et 6. Ceci est optimal pour le calcul de transformation des coordonnées cartésiennes en angles des segments du bras ; ce calcul intervenant lors de la commande par un programme du manipulateur.

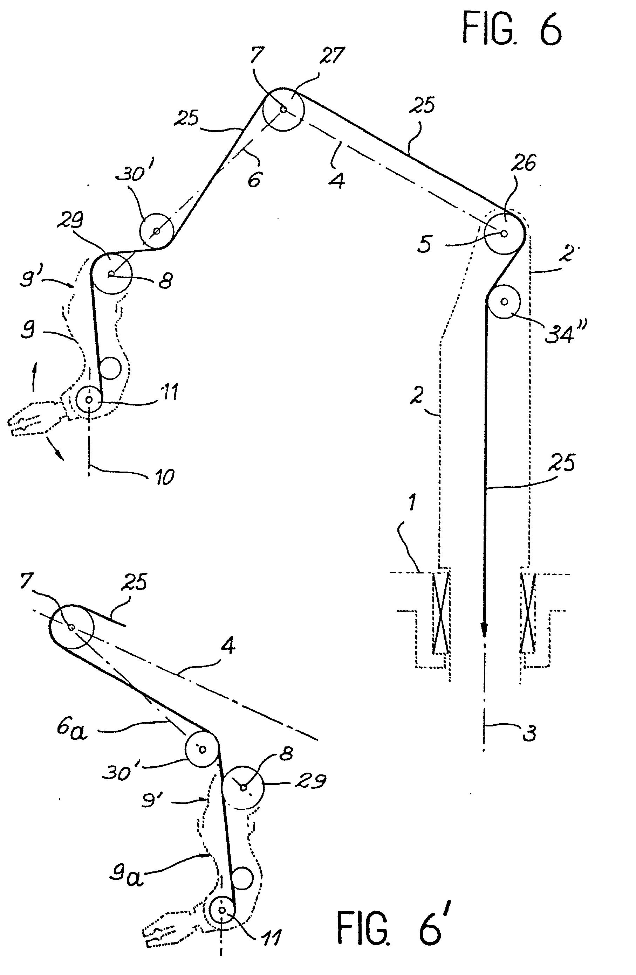

Cependant, selon une variante représentée sur la figure 6, on peut obtenir le même résultat bien que les axes ou groupes d'axes précédemment considérés ne soient pas concourants. En particulier, l'avant-bras 9 sur la fig. 6 n'est pas monté pivotant directement autour de l'axe 8, mais il est monté à l'extrémité d'une chappe 9' qui à son tour est montée pivotante autour de l'axe 8. Le désaxement est tel que le brin 25 allant vers l'articulation 11 est tangent à la poulie 29. Pour assurer que le brin 25 reste bien en contact avec la poulie 29, pour la position extrême représentée sur la figure 6' (position 6a et 9a respectivement du bras intermédiaire et de l'avant-bras 9) on ajoute une poulie de renvoi 30' montée sur le bras intermédiaire 6.

Il est alors nécessaire de prévoir au niveau de l'articulation d'épaule qui doit être déportée de la même façon par l'intermédiaire de la chappe 2', une poulie de renvoi par exemple 34" qui assure par rapport à la poulie 26 le report des câbles 25 au voisinage de l'axe 3. Ces dispositions allègent l'avant-bras 9 et permettent de réaliser les renvois avec des poulies de grand diamètre qui n'altèrent pas la résistance à la fatigue de l'ensemble des câbles.

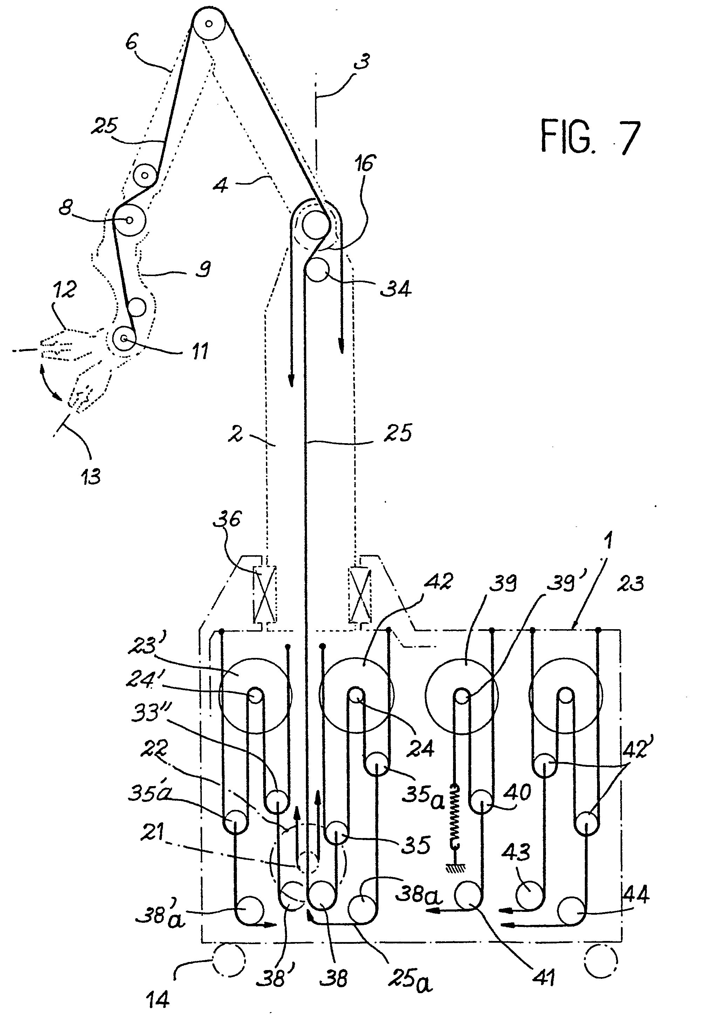

Sur la figure 7, on a représenté l'ensemble du manipulateur et, en particulier, le corps 1 du manipulateur pour montrer la façon dont on commande les différents câbles, rubans ou chaînes à l'aide des moteurs déjà indiqués. Sur cette figure, on a plus spécialement représenté la liaison avec les moteurs qui permettent les mouvements d'élévation de la pince et le mouvement de rotation de la pince 13 autour de son axe longitudinal. Un câble 25 de commande d'un tel mouvement qui est ramené à proximité de l'axe 3 du fût passe sur une poulie de renvoi 38 montée pivotante par rapport au corps 1 et ce câble est fixé sur la partie mobile d'un moufle 35 représenté schématiquement. Le brin antagoniste 25a passe sur une poulie de renvoi 38a montée de la même façon et l'extrémité du câble 25a est fixée sur la partie mobile d'un deuxième moufle 35a. Ces deux moufles antagonistes ont chacun une extrémité solidaire du corps 1 et leur autre extrémité est solidaire du cabestan 24 entraîné par le moteur 42.

Sur la gauche de la figure 7, on a représenté avec un montage tout à fait similaire, l'entraînement d'un câble du type 25 permettant le mouvement d'élévation et d'abaissement de la pince 12 autour de l'axe 11 qui sont réalisés de façon connue au niveau de l'axe 11 par un différentiel. On trouve le moteur 23', la poulie de renvoi 38' et le cabestan 35'. Pour le brin antagoniste du type 25a, on trouve la poulie de renvoi 38'a, le cabestan 35'a, ces deux moufles antagonistes étant entraînés par le cabestan 24' monté sur l'arbre du moteur 23'. Bien entendu, les brins antagonistes du type 25a passent sur une deuxième poulie de renvoi analogue et alignée avec les poulies 38'. Le moteur 39 avec son cabestan 39' assure le serrage de la pince. Ce moteur 39 est placé le plus près possible du moteur 42 et légèrement plus bas, car la course du moufle 40 qui lui est associé doit être plus courte. Le câble du type 25 qui commande le serrage de la pince passe sur la poulie de renvoi 41 puis sur une poulie analogue à la poulie 38. Enfin, encore plus à droite, on a figuré le moteur 23 réalisant la rotation du segment d'extrémité 9 autour de l'axe 10. La course de ce mouvement étant élevée, le moteur 23 est placé le plus haut possible dans le corps 1 et on a figuré ses deux moufles antagonistes 42' et 42'a ainsi que les poulies de renvoi 43 et 44 des deux brins antagonistes qui sont dirigés à nouveau selon l'axe 3 du fût par d'autres poulies de renvoi telles que 38 placées sur un même axe solidaire du corps 1.

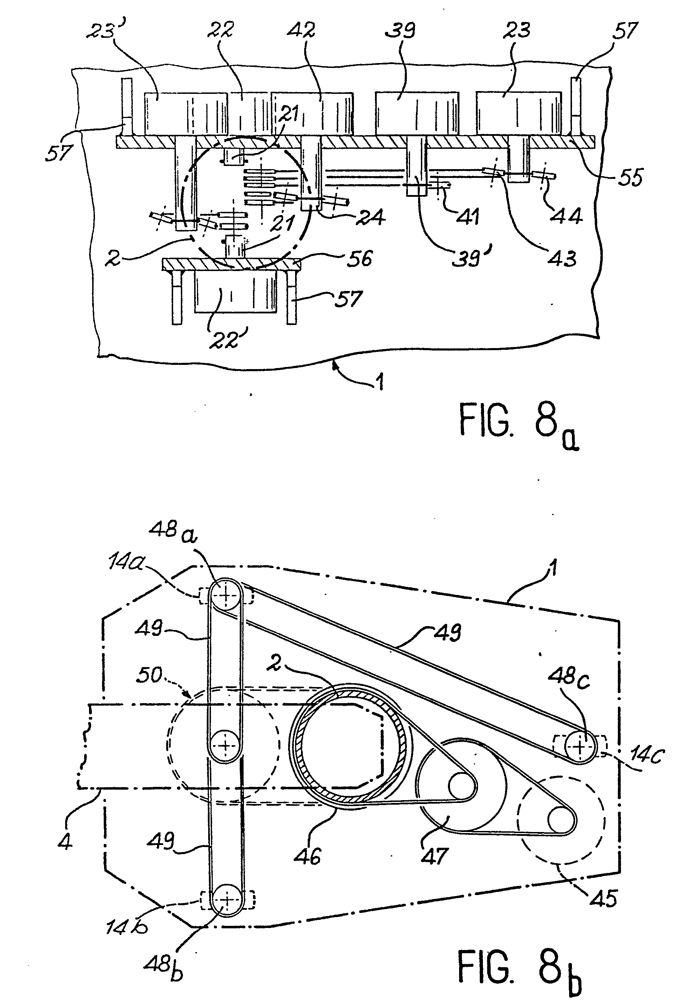

On voit ainsi que la totalité des moteurs au nombre de quatre ici figurés, peut être placée dans le même plan fixe, ces moteurs étant fixés sur une plaque verticale du corps, référencée 55 sur la figure 8a. Par ailleurs, on voit que la totalité des câbles du type 25, 25a est renvoyée sensiblement selon l'axe 3 du fût. On trouve en fait sept câbles, l'épaisseur de la nappe correspondante étant de 40 mm environ. On conçoit ainsi que le câblage est très simple à réaliser. De plus, tous les câbles de moufles s'attachent sur le haut du corps 1 où leur tension est facile à ajuster au point de fixation référencé 1.

Les moteurs 22 et 22' destinés à provoquer le mouvement autour des axes de pivotement 5 et 7 ont été représentés plus en détail sur la figure 8a.

Les cabestans 21 et 21' correspondants sont disposés symétriquement par rapport à l'axe 3 du fût. Plus précisément, le moteur 22 est fixé sur la plaque verticale 55 du corps 1 alors que le moteur 22' est fixé sur la plaque opposée 56 qui est plus petite. Sur cette figure, on n'a pas représenté les dispositifs pour obtenir le mouvement de rotation du fût. On a représenté ceux-ci sur la figure 8b. On voit que les plaques 55 et 56 sont fixées sur la plaque de base 1 par quatre équerres 57, ce qui laisse l'accès le plus libre au câblage selon ce premier mode de réalisation.

L'entraînement en rotation du fût 3 est assuré à partir d'un moteur 45 qui transmet cette rotation par l'intermédiaire d'un réducteur à deux étages réalisé par des câbles faisant plusieurs tours sur des poulies hélicoïdales. Le moteur 45 qui constitue le septième moteur du manipulateur est fixé sur une plaque supérieure horizontale du corps 1 qui est également fixée par équerre.

On voit que la construction ainsi réalisée est d'une grande facilité d'accès après enlèvement d'un capot de fermeture pour la mise en place des moteurs et surtout pour la mise en place de la câblerie de transmission assurant les différents mouvements.

Enfin, dans une caractéristique particulière de l'invention, on voit que le fût 2, commandé par la poulie 46 à partir du moteur 45, entraîne simultanément le pivotement de trois roues 14a, 14b, 14c qui sont montées chacune pivotantes autour d'un axe horizontal, cet axe lui-même étant pivotant autour d'un axe vertical pour assurer la direction de déplacement de l'ensemble du manipulateur. A chaque axe vertical est associée une poulie horizontale 48a, 48b, 48c. Ces poulies 48 sont entraînées en rotation par trois câbles 49 qui provoquent pour les roues le même mouvement de pivotement que celui du fût 2 autour de son axe vertical 3 grâce au système de transmission 50.

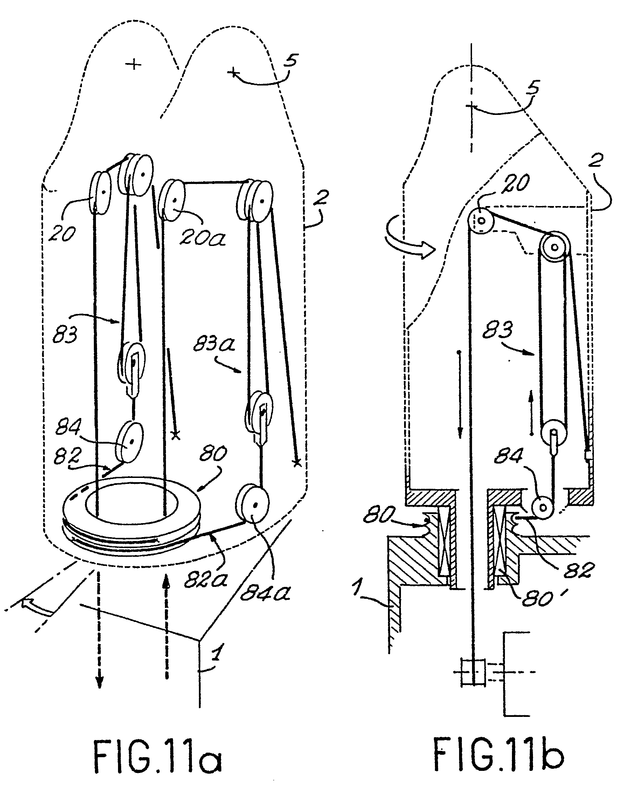

En conséquence, lorsque l'on désire faire avancer le corps 1, c'est-à-dire l'ensemble du manipulateur autonome selon une direction donnée, il suffit de commander la rotation d'une au moins de ces roues rendues motrices pour que ce déplacement s'effectue dans le plan même indiqué par les éléments du manipulateur. On a ainsi réalisé l'économie d'un mouvement, mais aussi une commande ergonomique. Il suffit de commander l'avance ou le recul du véhicule dont le corps 1 restera parallèle à lui-même. En variante, on peut également, pour le travail face à une table, préférer placer les trois roues 48 perpendiculairement au plan du bras et donner alors un déplacement transversal (parallèlement à la table). Ce maintien du parallélisme présente par ailleurs l'avantage lors d'une commande par calculateur que le manipulateur ne changera pas de référence angulaire. Sur les figures 11a et 11b, on a représenté une variante de réalisation de la commande de rotation du fût 2 autour de son axe vertical 3.

Selon cette variante une poulie 80 solidaire du corps 1 est concentrique à l'axe 3 et reçoit, par l'intermédiaire de roulements 80', la base 81 du fût libre en rotation.

Des câbles antagonistes 82 et 82a solidaires à une de leur extrémité de la poulie 80 s'attachent à l'extrémité opposée sur des moufles 83 et 83a après un renvoi d'angle sur les poulies 84 et 84a. Ces moufles ont leur train fixe solidaire de l'extrémité supérieure du fût alors que les deux autres moufles dudit fût ont leur train fixe attaché à la partie inférieure de ce fût. Par contre, les brins sortant des moufles 83, 83a passent pour leur renvoi dans la nappe centrale de câble par des poulies telles que 20, 20a semblables à celles des autres moufles, avant d'aller vers le moteur associé à ce mouvement qui est logé dans le corps 1.

L'intérêt de cette variante est essentiellement de permettre une réduction par moufle d'un rapport élevé qui dans la solution représentée sur la figure 8b demande deux étages de poulies qui rendent difficile le réglage de la tension des câbles.

En conclusion, on constate que le manipulateur selon l'invention présente la possibilité de réaliser l'indépendance totale des mouvements d'orientation de la pince et des mouvements de positionnement. En effet, si l'on se reporte à la figure 1, on constate que lors de la rotation d'ensemble par l'intermédiaire du fût 2, la totalité du bras exécute une rotation en même temps que le plan de ce dernier pivote autour de l'axe de rotation d'ensemble 3. Il suffit d'effectuer une rotation du même angle de l'avant-bras 9 autour de l'axe 10 pour que la pince 12, dans ces conditions, demeure rigoureusement parallèle à elle-même. Il est facile de commander la direction de ce mouvement de rotation autour de l'axe 10, à partir d'un asservissement utilisant non pas le potentiomètre du moteur actionné comme référence, mais la différence entre ce dernier et le potentiomètre qui repère la rotation d'ensemble du fût 2 autour de l'axe 3. Il est possible de réaliser cette soustraction par un renvoi de poulies supplémentaire non représenté, mais qui est à la portée de l'homme de l'art.

En considérant le mode le plus perfectionné de réalisation du manipulateur objet de l'invention, on constate que le calculateur qui doit réaliser la résolution des coordonnées du manipulateur n'a plus qu'à résoudre l'ensemble articulé 4 et 6 dans la rotation du plan du manipulateur autour de l'axe 3, ce qui se réalise par un calcul très simple et que tout mouvement de ce fût, de l'épaule ou du coude n'entraînera aucun changement de direction de la pince 12. Il en résulte que la résolution inverse du manipulateur est grandement simplifiée pour le calculateur.

Cependant, pour un usage sans calculateur, on peut profiter inversement d'une commande auxiliaire de l'avant-bras ou bras inférieur 9 autour de son axe de pivotement 8 par rapport au bras intermédiaire, pour donner la meilleure approche de la pince dans un espace encombré.

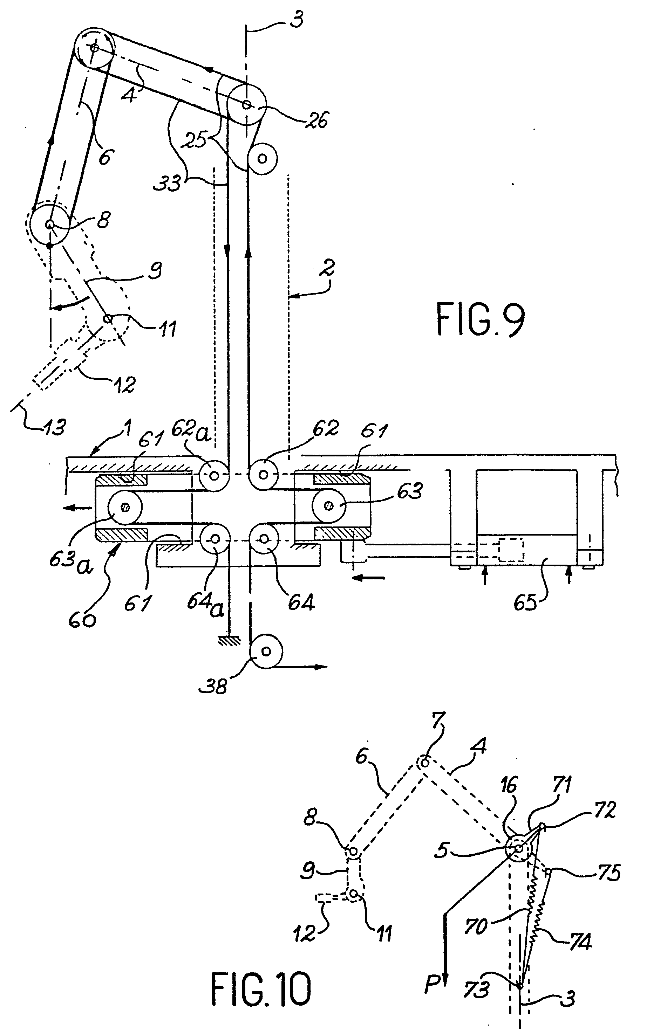

On a représenté sur la figure 9 un mode de réalisation de cette commande auxiliaire. On a placé dans un corps 1 un tiroir mobile d'axe 60 concourant à l'axe 3 du fût et guidé par des glissières 61 solidaires dudit corps. Ce tiroir peut être déplacé par un organe d'actionnement 65 du type vérin irréversible (par exemple à vis) qui est fixé sur le corps 1 et sur le tiroir 60. Le ou les câbles antagonistes 33 venant de la poulie 26 à double gorge est maintenu au voisinage de l'axe 3 par des poulies de renvoi 62a, 64a. Il passe sur la poulie 63a solidaire du tiroir 60 et le brin sortant est solidaire du corps 1. De même, la nappe de câbles 25 en sortant des poulies 26 passe sur les poulies de renvoi 62 et 64 et sur les poulies 63, puis passe sur les poulies 38 pour aller vers les moteurs de commande. On comprend qu'en agissant sur le tiroir 60, par modification des longueurs égales et opposées sur les brins 33 et 25, on modifie l'angle que fait l'axe longitudinal du bras inférieur 9 avec l'axe 3 du fût 2, mais qu'en laissant ce tiroir immobile, cet angle reste constant lorsqu'on commande les câbles 25 pour agir sur la pince 12 ou sur le bras supérieur ou le bras intermédiaire comme on l'a vu fig. 4.

Sur la figure 10, on a représenté un mode d'équilibrage des bras supérieur et intermédiaire lorsque l'axe 3 du fût 2 est vertical, l'équilibrage de la pince 12 autour de l'axe 11 étant négligé. Dans ces conditions, un équilibrage par ressorts est possible. Un ressort 70 attaché par une extrémité 72 à un levier 71 de la poulie 16, parallèle à l'axe du bras intermédiaire 6 applique le couple de ce bras intermédiaire 6 et du poids fixé au niveau de l'axe 8, qui est équivalent au poids P représenté en pointillés (sur la figure 10) dans le prolongement du levier 71.

Il est connu qu'en choisissant le coefficient d'allongement du ressort 70 et sa longueur entre le point d'attache 72 et le point d'attache 73 disposé dans le plan vertical contenant l'axe 5, on peut équilibrer rigoureusement le poids P en toute position angulaire du levier 71 durant le fonctionnement normal. Pratiquement, le ressort 70 est disposé sur un côté à l'extérieur du fût 2.

De même, un deuxième ressort 74, disposé de l'autre côté du fût 2 attaché au point 75 dans le prolongement de l'axe du bras supérieur 4, équilibre le poids du bras supérieur 4 et le poids constant dû au bras intermédiaire 6 et au bras inférieur 9 considéré comme appliqué à l'axe 7.

**Revendications**

1. Manipulateur motorisé comprenant un corps (1), un fût (2) mobile en rotation autour de son axe longitudinal (3) par rapport audit corps, un bras supérieur (4) articulé à l'extrémité du fût autour d'un axe d'épaule (5) orthogonal à l'axe longitudinal du fût et à l'axe longitudinal du bras, un avant-bras (9) articulé autour d'un troisième axe (8) parallèle à l'axe d'épaule, ledit avant-bras étant susceptible de tourner autour de son axe longitudinal (10), un outil (12) présentant un axe longitudinal (13), monté pivotant à l'extrémité dudit avant-bras autour d'un axe (11) normal au plan défini par les axes longitudinaux dudit avant-bras et dudit outil, ledit outil étant susceptible de tourner autour de son axe longitudinal, et une pluralité de moteurs (22, 22', 23) solidaires dudit corps (1) et de moyens de transmission par câbles et poulies pour transmettre les mouvements de commande des moteurs aux éléments mobiles correspondants du manipulateur, caractérisé en ce qu'il comprend de plus un bras intermédiaire (6) articulé directement à l'extrémité du bras supérieur (4) autour d'un axe de coude (7) parallèle à l'axe d'épaule, l'avant-bras (9) étant articulé à l'extrémité du bras intermédiaire (6) et en ce que le corps (1) est monté sur des roues (14) et comprend un moteur (45) d'entraînement en rotation du fût (2) par rapport au corps (1) autour de son axe longitudinal et des moyens de transmission (49, 50) pour coupler la rotation dudit fût avec la rotation desdites roues autour de leurs axes de pivotement verticaux, de telle façon que la direction commune prise par lesdites roues soit confondue avec la projection sur le plan de déplacement du manipulateur de la direction de l'axe longitudinal du bras.

2. Manipulateur selon la revendication 1, caractérisé en ce que lesdits moyens de transmission par câbles et poulies comprennent des moyens (25, 25a, 33) pour maintenir l'axe longitudinal de l'avant-bras (9) parallèle à l'axe du fût (2) quels que soient les autres mouvements.

3. Manipulateur selon la revendication 2, caractérisé en ce que lesdits moyens consistent en au moins un câble ou ruban (25, 25a) solidaire du fût (2) et de l'avant-bras (9), et passant sur des poulies de même diamètre (26, 26a, 27, 27a, 29, 29a) montées respectivement sur l'axe d'épaule, l'axe de coude et le troisième axe.

4. Manipulateur selon la revendication 1, caractérisé en ce que les moyens de transmission par câbles et poulies comprennent des moyens montés sur ledit corps pour donner à l'angle entre l'axe longitudinal de l'avant-bras (9) et l'axe du fût (2) une valeur réglable donnée, et pour maintenir cet angle constant quels que soient les autres mouvements.

5. Manipulateur selon la revendication 4, caractérisé en ce que lesdits moyens pour donner audit angle une valeur réglable donnée consistent en un tiroir (60) mobile en translation par rapport audit corps (1) dans un plan perpendiculaire à l'axe dudit fût (2), ledit tiroir étant monté dans ledit corps entre le fût et lesdits moteurs, ledit tiroir comportant un premier ensemble de poulies (63) sur lesquelles passent les câbles ou rubans (25) de commande des mouvements de l'avant-bras (9) et de l'outil (12), et un deuxième ensemble de poulies sur lesquelles passent des câbles ou rubans antagonistes (33) desdits câbles ou rubans précédents, lesdits câbles ou rubans (25) passant sur des poulies de même diamètre (26, 27, 29) montées auxdits axes d'épaule (5), de coude (7) et audit troisième axe (8) et sur des poulies de renvoi (62, 64) selon une direction parallèle à l'axe du fût, solidaires du corps et placés de part et d'autre du tiroir.

6. Manipulateur selon l'une quelconque des revendications 1 à 5, caractérisé en ce que le mouvement de rotation de l'avant-bras (9) autour de son axe longitudinal (10) et les mouvements de l'outil (12) par rapport audit avant-bras sont commandés chacun par deux brins de câble ou ruban (25, 25a) antagonistes, l'extrémité des brins antagonistes associés à un même mouvement étant solidaire de la partie mobile (35, 35a) de deux moufles antagonistes dont les parties fixes sont solidaires dudit corps (1), les extrémités libres des brins (25', 25'a) des moufles antagonistes étant fixées sur un cabestan (24) entraîné par un moteur (23), les moteurs (23, 23', 42, 39) associés à ces mouvements et au mouvement d'ouvertures de l'outil (12) étant tous fixés sur une cloison verticale (55) dudit corps.

7. Manipulateur selon l'une quelconque des revendications 1 à 6, caractérisé en ce que l'axe de rotation (3) dudit fût (2) est vertical et en ce qu'il comprend des moyens d'équilibrage consistant en un premier ressort (70) dont une première extrémité (72) est solidaire d'un levier (71) pivotant autour de l'axe d'épaule (5) et assujetti à rester parallèle à l'axe longitudinal du bras intermédiaire (6) et dont l'autre extrémité (73) est solidaire du fût, et un deuxième ressort (74) dont une extrémité (75) est solidaire d'un levier prolongeant l'axe longitudinal du bras supérieur (4) et dont l'autre extrémité est solidaire dudit fût.

8. Manipulateur selon l'une quelconque des revendications 1 à 7, caractérisé en ce que les moyens de mise en rotation dudit fût (2) autour de son axe par rapport audit corps (1) comprennent une poulie (80) solidaire du corps et dont l'axe (5) est confondu avec celui du fût, et deux brins antagonistes (82, 82a) dont une extrémité est solidaire de ladite poulie, qui passent chacun sur un moufle (83, 83a), et dont l'autre extrémité est solidaire du moteur d'entraînement associé.

9. Manipulateur motorisé comprenant un corps (1), un fût (2) mobile en rotation autour de son axe longitudinal (3) par rapport audit corps, un bras supérieur (4) articulé à l'extrémité du fût autour d'un axe d'épaule (5) orthogonal à l'axe longitudinal du fût et à l'axe longitudinal du bras, un avant-bras (9) articulé autour d'un troisième axe (8) parallèle à l'axe d'épaule, ledit avant-bras étant susceptible de tourner autour de son axe longitudinal (10), un outil (12) présentant un axe longitudinal (13), monté pivotant à l'extrémité dudit avant-bras autour d'un axe (11) normal au plan défini par les axes longitudinaux dudit avant-bras et dudit outil, ledit outil étant susceptible de tourner autour de son axe longitudinal, et une pluralité de moteurs (22, 22', 33) solidaires dudit corps (1) et de moyens de transmission par câbles et poulies pour transmettre les mouvements de commande des moteurs aux éléments mobiles correspondants du manipulateur, caractérisé en ce qu'il comprend de plus un bras intermédiaire (6) articulé directement à l'extrémité du bras supérieur (4) autour d'un axe de coude (7) parallèle à l'axe d'épaule, l'avant-bras (9) étant articulé à l'extrémité du bras intermédiaire et en ce qu'au moins le mouvement de rotation de l'avant-bras (9) autour de son axe longitudinal (10) et les mouvements de l'outil (12) par rapport audit avant-bras sont commandés chacun par au moins un premier câble ou ruban (25, 25a) passant sur des premières poulies (26, 26a, 27, 27a, 28, 28a) de même diamètre montées respectivement sur l'axe d'épaule (5), l'axe de coude (7) et le troisième axe (8), un ou deux câbles ou rubans antagonistes (33) passant sur des deuxièmes poulies (26b, 27b, 29b) de même diamètre que les premières poulies et montées respectivement sur l'axe d'épaule (5), l'axe de coude (7) et le troisième axe (8), le ou lesdits câbles ou rubans antagonistes (33) étant montés en opposition par rapport au ou aux premiers câbles ou rubans (25, 25a), de façon à équilibrer la tension de ces derniers et à maintenir l'angle formé entre l'axe longitudinal de l'avant-bras (9) et l'axe du fût (2) à une valeur donnée.

10. Manipulateur selon la revendication 9, caractérisé en ce que le ou les premier câbles ou rubans (25, 25a) sont fixés chacun à la partie mobile (35, 35a) d'un moufle dont la partie fixe est solidaire du corps (1), l'extrémité libre du brin (25', 25'a) du moufle étant fixée sur un cabestan (24) entraîné par un moteur (23).

11. Manipulateur selon l'une quelconque des revendications 9 et 10, caractérisé en ce que les moyens de mise en rotation dudit fût (2) autour de son axe par rapport audit corps (1) comprennent une poulie (80) solidaire du corps et dont l'axe (5) est confondu avec celui du fût, et deux brins antagonistes (82, 82a) dont une extrémité est solidaire de ladite poulie, qui passent chacun sur un moufle (83, 83a), et dont l'autre extrémité est solidaire du moteur d'entraînement associé.

12. Manipulateur selon l'une quelconque des revendications 9 à 11, caractérisé en ce que ledit corps (1) est monté sur des roues (14) et en ce qu'il comprend un moteur (45) d'entraînement en rotation dudit fût (2) par rapport au corps (1) autour de son axe longitudinal et des moyens de transmission (49, 50) pour coupler la rotation dudit fût avec la rotation desdites roues autour de leurs axes de pivotement verticaux.

13. Manipulateur selon la revendication 9, caractérisé en ce que des moyens sont prévus pour régler l'angle formé entre l'axe longitudinal de l'avant-bras (9) et l'axe du fût (2), ces moyens comprenant un tiroir (60) mobile en translation par rapport audit corps (1) dans un plan perpendiculaire à l'axe dudit fût (2), ledit tiroir étant monté dans ledit corps entre le fût et lesdits moteurs, ledit tiroir comportant un premier ensemble de poulies (63) sur lesquelles passent le ou les premiers câbles ou rubans (25), et un deuxième ensemble de poulies (63a) sur lesquelles passent le ou les câbles ou rubans antagonistes (33), lesdits câbles ou rubans (25, 33) passant sur les poulies de même diamètre (26, 27, 29) montées auxdits axes d'épaule (5), de coude (7) et audit troisième axe (8) et sur des poulies de renvoi (62, 64, 62a, 64a) selon une direction parallèle à l'axe du fût, solidaires du corps et placés de part et d'autre du tiroir.

**Claims**

1. Motorized manipulator comprising a chassis (1), a jib-post (2) rotatable with respect to the chassis around its longitudinal axis (3), an upper arm (4) articulated at the end of the jib-post around a shoulder axis (5) orthogonal to the longitudinal axis of the jib-post and the longitudinal axis of the arm, a fore-arm (9) articulated around a third axis (8) parallel to the shoulder axis, said fore-arm being capable of turning around its longitudinal axis (10), a tool (12) having a longitudinal axis (13), pivotally mounted at the end of said fore-arm around an axis (11) normal to the plane defined by the longitudinal axes of said tool and said fore-arm, said tool being capable of turning around its longitudinal axis, and a plurality of motors (22, 22' 23) fixed to said chassis (1) cable and pulley transmission means for transmitting command movements from said motors to corresponding mobile elements of the manipulator, characterized in that it additionally comprises an intermediate arm (6) directly articulated at the end of the upper arm (4) around an elbow axis (7) parallel to the shoulder axis, the fore-arm (9) being articulated at the end of the intermediate arm (6), and in that the chassis (1) is mounted on wheels (14) and comprises a motor (45) for rotating the jib-post (2) with respect to the chassis (1) around its longitudinal axis, and transmission means (49, 50) to couple the rotation of said jib-post with the rotation of said wheels around vertical pivoting axes, whereby the wheels are oriented in common in the same direction as the direction of the longitudinal axis of the arms projected on the plane of displacement of the manipulator.

2. Manipulator according to Claim 1, characterized in that the said cable and pulley transmission means comprise means (25, 25a, 33) for maintaining the longitudinal axis of the fore-arm (9) parallel to the axis of the jib-post (2) whatever the other movements.

3. Manipulator according to Claim 2, characterized in that said means comprise at least one cable or belt (25, 25a) associated with the jib-post (2) and the fore-arm (9) and passing over pulleys of the same diameter (26, 26a, 27, 27a, 29, 29a) mounted respectively on the shoulder axis, the elbow axis and the third axis.

4. Manipulator according to Claim 1, characterized in that the cable and pulley transmission means comprise means mounted on said chassis to provide the angle between the longitudinal axis of the fore-arm (9) and the axis of the jib-post (2) with a controllable predetermined value, and to maintain this angle constant whatever the other movements.

5. Manipulator according to Claim 4, characterized in that said means for providing said angle with a controllable predetermined value comprise a slide-member (60), movable with respect to said chassis (1) in a plane perpendicular to the axis of said jib-post (2), said slide-member being mounted in said chassis between the jib-post and said motors, said slide-member comprising a first pulley-assembly (63) over which pass cables or belts (25) for commanding movements of the fore-arm (9) and the tool (12), and a second pulley assembly over which pass cables or belts (33) in opposition to the aforementioned cables or belts, said cables or belts (25) running in a direction parallel to the axis of the jib-post and passing over pulleys of the same diameter (26, 27, 29) mounted on said shoulder axis (5), elbow axis (7) and said third axis (8) and over turn-pulleys (62, 64) mounted in the chassis and located on either side of the slide member.

6. Manipulator according to any one of Claims 1 to 5, characterized in that rotational movement of the fore-arm (9) around its longitudinal axis (10) and the movements of the tool (12) with respect to said fore-arm are each commanded by two opposed strands of cable or belt (25, 25a), the ends of opposed strands associated with one movement being associated with the movable blocks (35, 35a) of two opposed tackles whose fixed blocks are mounted on said chassis (1), the free ends of the strands (25', 25'a) of the opposed tackles being fixed on a capstan (24) driven by a motor (23), the motors (23, 23', 42, 39) associated with these movements and with opening movement of the tool (12) being all mounted on a vertical partition (55) in said chassis.

7. Manipulator according to any one of Claims 1 to 6, characterized in that the axis of rotation (3) of said jib-post (2) is vertical and in that it comprises equilibration means comprising a first spring (70), a first end (72) of which is linked to a lever (71) pivotting about the shoulder axis (5) and fixed to remain parallel to the longitudinal axis of the intermediate arm (6), and whose other end (73) is linked to the jib-post, and a second spring (74) of which one end (75) is linked to a lever prolonging the longitudinal axis of the upper arm (4) and whose other end is linked to said jib-post.

8. Manipulator according to any one of Claims 1 to 7, characterized in that the means for rotating said jib-post (2) around its axis with respect to said chassis (1) comprise a pulley (80) associated with the chassis, and whose axis (5) is coaxial with that of the jib-post, and two opposed cable strands (82, 82a) one end of which is associated with said pulley, each passing through a tackle (83, 83a), and whose other end is linked to an associated drive motor.

9. Motorized manipulator comprising a chassis (1), a jib-post (2) rotatable with respect to the chassis around its longitudinal axis (3), an upper arm (4) articulated at the end of the jib-post around a shoulder axis (5) orthogonal to the longitudinal axis of the jib-post and the longitudinal axis of the arm, a fore-arm (9) articulated around a third axis (8) parallel to the shoulder axis, said fore-arm being · capable of turning around its longitudinal axis (10), a tool (12) having a longitudinal axis (13), pivotally mounted at the end of said fore-arm around an axis (11) normal to the plane defined by the longitudinal axes of said tool and said fore-arm, said tool being capable of turning around its longitudinal axis, and a plurality of motors (22, 22', 23) fixed to said chassis (1) and cable and pulley transmission means for transmitting command movements from said motors to corresponding mobile elements of the manipulator, characterized in that it additionally comprises an intermediate arm (6) directly articulated at the end of the upper arm (4) around an elbow axis (7) parallel to the shoulder axis, the fore-arm (9) being articulated at the end of the intermediate arm and in that at least the rotational movement of the fore-arm (9) about its longitudinal axis (10) and the movements of tool (12) with respect to the fore-arm are commanded by at least one first cable or belt (25, 25a) passing over first pulleys (26, 26a, 27, 27a, 28, 28a) of the same diameter mounted respectively on the shoulder axis (5), the elbow axis (7) and the third axis (8), one or two opposed cables or belts (33) passing over second pulleys (26b, 27b, 29b) of the same diameter as the first pulleys and mounted respectively on the shoulder axis (5), the elbow axis (7) and the third axis (8), the said opposed cable(s) or belt(s) (33) being mounted in opposition with respect to the first cable(s) or belt(s) (25, 25a), whereby to equilibrate the tension of the latter and to maintain at a predetermined value the angle formed between the longitudinal axis of the fore-arm (9) and the axis of the jib-post.

10. Manipulator according to Claim 9, characterized in that the first cable(s) or belt(s) (25, 25a) are each fixed to the movable block (35, 35a) of a tackle whose fixed block is linked to the chassis (1), the free end of the cable (25', 25'a) of the tackle being associated with a capstan (24) driven by a motor (23).

11. Manipulator according to either of Claims 9 and 10, characterized in that the means for rotating said jib-post (2) around its axis with respect to said chassis (1) comprise a pulley (80) associated with the chassis, and whose axis (5) is coaxial with that of the jib-post, and two opposed cable strands (82, 82a) one end of which is associated with said pulley, each passing through a tackle (83, 83a), and whose other end is linked to an associated drive motor.

12. Manipulator according to any one of Claims 9 to 11, characterized in that said chassis (1) is mounted on wheels (14) and in that it comprises a motor (45) for driving rotation of said jib-post (2) with respect to said chassis (1) around its longitudinal axis, and transmission means (49, 50) to couple the rotation of said jib-post with rotation of said wheels around vertically pivotting axes.

13. Manipulator according to Claim 9, characterized in that means are provided to control the angle between the longitudinal axis of the forearm (9) and the axis of the jib-post (2), said means comprising a slide-member (60), movable with respect to said chassis (1) in a plane perpendicular to the axis of said jib-post (2), said slide-member being mounted in said chassis between the jib-post and said motors, said slide-member comprising a first pulley-assembly (63) over which pass the or the first cables or belts (25) and a second pulley assembly (63a) over which pass the opposed cable(s) or belt(s) (33), said cables or belts (25, 33) running in a direction parallel to the axis of the jib-post and passing over pulleys of the same diameter (26, 27, 29) mounted on said shoulder axis (5), elbow axis (7) and said third axis (8) and over turn-pulleys (62, 64, 62a, 64a) mounted in the chassis and located on either side of the slide member.

**Ansprüche**

1. Motorisierter Manipulator, mit einem Hauptteil (1), einem relativ zu dem Hauptteil um seine Längsachse (3) drehbaren Pfosten (2), einem oberen Arm (4), der an dem Ende des Pfostens um eine Schulterachse (5) verschwenkbar abgeordnet ist, welche orthogonal zu der Längsachse des Pfostens und der Längsachse des Armes verläuft, einem Vorderarm (9), der um eine dritte, zur Schulterachse parallele Achse (8) verschwenkbar ist, wobei der Vorderarm um seine Längsachse (10) verdrehbar ist, einem eine Längsachse (13) aufweisenden Werkzeug (12), welches an dem Ende des Vorderarmes um eine Achse (11) verschwenkbar befestigt ist, die normal zu der durch die Längsachsen des Vorderarmes und des Werkzeuges festgelegten Ebene verläuft, wobei das Werkzeug um seine Längsachse drehbar ist, sowie einer Vielzahl mit dem Hauptteil (1) fest verbundenen Motoren (22, 22', 23) und Mitteln zur Kraftübertragung durch Seile und Seilscheiben, um die Steuerbewegungen der Motoren auf die entsprechenden, bewegbaren Elemente des Manipulators zu übertragen, dadurch gekennzeichnet, daß der Manipulator ferner einen Zwischenarm (6) aufweist, welcher direkt an dem Ende des oberen Armes (4) um eine zu der Schulterachse parallele Ellbogenachse (7) verschwenkbar angeordnet ist, wobei der Vorderarm (9) an dem Ende des Zwischenarmes (6) angelenkt ist, und daß an dem Hauptteil (1) Räder (14) befestigt sind und jenes einen Motor (45) zum Drehantrieb des Pfostens (2) relativ zu dem Hauptteil (1) um seine Längsachse und Kraftübertragungsmittel (49, 50) aufweist, um die Drehung des Pfostens mit der Drehung der Räder um ihre vertikalen Schwenkachsen derart zu koppeln, daß die von den Rädern eingenommene, gemeinsame Richtung mit der Projektion der Richtung der Längsachse des Armes auf die Fahrebene zusammenfällt.

2. Manipulator nach Anspruch 1, dadurch gekennzeichnet, daß die Mittel zur Kraftübertragung durch Seile und Seilscheiben Mittel (25, 25a, 33) umfassen, die die Längsachse des Vorderarmes (9) zu der Achse des Pfostens (2) parallel halten, wie auch immer die anderen Bewegungen sein mögen.

3. Manipulator nach Anspruch 2, dadurch gekennzeichnet, daß diese Mittel mindestens aus einem Seil oder Band (25, 25a) bestehen, welches an dem Pfosten (2) und dem Vorderarm (9) befestigt ist und über Seilscheiben gleichen Durchmessers (26, 26a, 27, 27a, 29, 29a) läuft, die auf der Schulterachse, der Ellbogenachse und der dritten Achse angeordnet sind.

4. Manipulator nach Anspruch 1, dadurch gekennzeichnet, daß die Mittel zur Kraftübertragung durch Seile und Seilscheiben Mittel umfassen, die an dem Hauptteil angeordnet sind, um dem Winkel zwischen der Längsachse des Vorderarmes (9) und der Achse des Pfostens (2) einen vorbestimmten, einstellbaren Wert zu geben und um diesen Winkel konstant zu halten, wie auch immer die anderen Bewegungen sein mögen.

5. Manipulator nach Anspruch 4, dadurch gekennzeichnet, daß die Mittel, um dem Winkel einen einstellbaren, vorgegebenen Wert zu geben, einen Schlitten (60) umfassen, der in Querrichtung in bezug auf das Hauptteil (1) in einer zu der Achse des Pfostens (2) senkrechten Ebene bewegbar ist, wobei der Schlitten in dem Hauptteil zwischen dem Pfosten und den Motoren angeordnet ist und eine erste Anordnung von Seilscheiben (63), über die die Seile oder Bänder (25) zum Steuern der Bewegungen des Vorderarmes (9) und des Werkzeuges (12) laufen, und eine zweite Anordnung von Seilscheiben umfaßt, über die die zu den vorhergehend genannten Seilen oder Bändern gegenwirkenden Seile oder Bänder (33) laufen, wobei die Seile oder Bänder (25) über Seilscheiben (26, 27, 29) gleichen Durchmessers, die an der Schulterachse (5), der Ellenbogenachse (7) und der dritten Achse (8) angeordnet sind, und längs einer zu der Achse des Pfostens parallelen Richtung über Rückführseilscheiben (62, 64), die an dem Hauptteil befestigt und beiderseits des Schlitzes angeordnet sind langen.

6. Manipulator nach irgendeinem der Ansprüche 1 bis 5, dadurch gekennzeichnet, daß die Drehbewegung des Vorderarmes (9) um seine Längsachse (10) und die Bewegungen des Werkzeuges (12) relativ zu dem Vorderarm jeweils durch zwei gegenwirkende Abschnitte des Seils oder Bandes (25, 25a) gesteuert sind, wobei das Ende der gegenwirkenden Abschnitte, die einer gleichen Bewegung zugeordnet sind, mit dem beweglichen Teil (35, 35a) von zwei gegenwirkenden Flaschenzügen verbunden sind, deren feste Teile mit dem Hauptteil (1) verbunden sind, und wobei die freien Enden der Abschnitte (25', 25'a) der gegenwirkenden Flaschenzüge an einer von einem Motor (23) antreibbaren Antriebsrolle (24) mit senkrechter Achse befestigt sind, und daß die diesen Bewegungen und der Bewegung zum Öffnen des Werkzeuges (12) zugeordneten Motoren (23, 23', 42, 39) alle an einer vertikalen Wand (55) des Hauptteils befestigt sind.

7. Manipulator nach irgendeinem der Ansprüche 1 bis 6, dadurch gekennzeichnet, daß die Drehachse (3) des Pfostens (2) vertikal verläuft und daß diese Ausgleichmittel umfaßt, die aus einer ersten Feder (70), deren eines erstes Ende (72) an einem Hebel (71) befestigt ist, welcher um die Schulterachse (5) verschwenkbar und dazu unterworfen ist, parallel zur Längsachse des Zwischenarmes (6) zu bleiben, und deren anderes Ende (73) an dem Pfosten befestigt ist, und eine zweite Feder (74) bestehen, deren eines Ende (75) an einem Hebel, welcher die Längsachse des oberen Armes (4) verlängert, und deren anderes Ende an dem Pfosten befestigt ist.

8. Manipulator nach irgendeinem der Ansprüche 1 bis 7, dadurch gekennzeichnet, daß die Mittel, um den Pfosten (2) in eine Drehung um seine Achse relativ zu dem Hauptteil (1) zu versetzen, eine Seilscheibe (80), die an dem Hauptteil befestigt ist und deren Achse (5) mit derjenigen des Pfostens zusammenfällt, und zwei gegenwirkende Seilteile (82, 82a) umfassen, von denen jedes über einen Flaschenzug (83, 83a) läuft und deren jeweilig eines Ende an der Seilscheibe (80) und deren jeweilig anderes Ende an dem zugeordneten Antriebsmotor befestigt ist.

9. Motorisierter Manipulator, mit einem Hauptteil (1), einem relativ zu dem Hauptteil um seine Längsachse (3) drehbaren Pfosten (2), einem oberen Arm (4), der an dem Ende des Pfostens um eine Schulterachse (5) verschwenkbar abgeordnet ist, welche orthogonal zu der Längsachse des Pfostens und der Längsachse des Armes verläuft, einem Vorderarm (9), der um eine dritte, zur Schulterachse parallele Achse (8) verschwenkbar ist, wobei der Vorderarm um seine Längsachse (10) verdrehbar ist, einem eine Längsachse (13) aufweisenden Werkzeuge (12), welches an dem Ende des Vorderarmes um eine Achse (11) verschwenkbar befestigt ist, die normal zu der durch die Längsachsen des Vorderarmes und des Werkzeuges festgelegten Ebene verläuft, wobei das Werkzeug um seine Längsachse drehbar ist, sowie einer Vielzahl mit dem Hauptteil (1) fest verbundenen Motoren (22, 22', 23) und Mitteln zur Kraftübertragung durch Seile und Seilscheiben, um die Steuerbewegungen der Motoren auf die entsprechenden, bewegbaren Elemente des Manipulators zu übertragen, dadurch gekennzeichnet, daß der Manipulator ferner einen Zwischenarm (6) umfaßt, der direkt an einem Ende des oberen Armes (4) um eine parallel zur Schulterachse verlaufende Ellenbogenachse (7) verschwenkbar angelenkt ist, wobei der Vorderarm (9) an dem Ende des Zwischenarmes angelenkt ist, und daß mindestens die Drehbewegung des Vorderarmes (9) um seine Längsachse (10) und die Bewegungen des Werkzeuges (12) relativ zu dem Vorderarm jeweils von wenigstens einem ersten Seil oder Band (25, 25a) gesteuert werden, welches über erste Seilscheiben (26, 26a, 27, 27a, 28, 28a) gleichen Durchmessers läuft, die auf der Schulterachse (5) der Ellenbogenachse (7) bzw. der dritten Achse (8) angeordnet sind, daß ein oder zwei gegenwirkende Seile oder Bänder (33) über zweite Seilscheiben (26b, 27b, 29b) gleichen Durchmessers wie die ersten Seilscheiben laufen, die auf der Schulterachse (5), der Ellenbogenachsen (7) bzw. der dritten Achse (8) angeordnet sind, daß das oder die gegenwirkenden Seile oder Bänder (33) bezüglich dem ersten oder den ersten Seilen oder Bändern (25, 25a) gegenüberliegend derart angeordnet sind, daß die Spannung dieser letzteren ausgeglichen und der zwischen der Längsachse des Vorderarmes (9) und der Achse des Pfostens (2) eingeschlossene Winkel auf einem vorgegebenen Wert gehalten wird.

10. Manipulator nach Anspruch 9, dadurch gekennzeichnet, daß der oder die ersten Seile oder Bänder (25, 25a) jeweils an dem beweglichen Teil (35, 35a) eines Flaschenzuges befestigt sind, deren fester Teil an dem Hauptteil (1) befestigt ist, wobei das freie Ende des Abschnittes (25', 25'a) des Flaschenzuges an einer von einem Motor (23) antreibbaren Antriebsrolle (24) befestigt ist.

11. Manipulator nach irgendeinem der Ansprüche 9 oder 10 dadurch gekennzeichnet, daß die Mittel, um den Pfosten (2) in eine Drehung um seine Achse relativ zu dem Hauptteil (1) zu versetzen, eine Seilscheibe (80), die an dem Körper befestigt ist und deren Achse (5) mit derjenigen des Pfostens zusammenfällt, und zwei gegenwirkende Seilteile (82, 82a) umfassen, von denen jedes über einen Flaschenzug (83, 83a) läuft und deren jeweilig eines Ende an der Seilscheibe (80) und deren jeweilig anderes Ende an dem zugeordneten Antriebsmotor befestigt ist.

12. Manipulator nach irgendeinem der Ansprüche 9 bis 11, dadurch gekennzeichnet, daß das Hauptteil (1) auf Rädern (14) befestigt ist und daß es einen Motor (45) zum Drehantrieb des Pfostens (2) relativ zu dem Hauptteil (1) um seine Längsachse und Kraftübertragungsmittel (49, 50) aufweist, um die Drehung des Pfostens mit der Drehung der Räder um ihre vertikalen Schwenkachsen zu koppeln.

13. Manipulator nach Anspruch 9, dadurch gekennzeichnet, daß Mittel vorgesehen sind, um den zwischen der Längsachse des Vorderarmes (9) und der Achse des Pfostens (2) gebildeten Winkel einzustellen, wobei diese Mittel einen Schlitten (60) umfassen, der in Querrichtung relativ zu dem Hauptteil (1) in einer zu der Achse des Pfostens (2) senkrechten Ebene bewegbar ist, daß der Schlitten in dem Hauptteil zwischen dem Pfosten und den Motoren angeordnet ist und eine erste Anordnung von Seilscheiben (63), über die das oder die ersten Seile oder Bänder (25) laufen, und eine zweite Anordnung von Seilscheiben (63a) aufweist, über die das entgegenwirkende oder die entgegenwirkenden Seile oder Bänder (33) laufen, daß die Seile oder Bänder (25, 33) über die Seilscheiben (26, 27, 29) gleichen Durchmessers, die auf der Schulterachse (5), der Ellenbogenachse (7) und der dritten Achse (8) angeordnet und über Rückführseilscheiben (62, 64, 62a, 64a) längs einer Richtung parallel zur Achse des Pfostens laufen, welche an dem Hauptteil befestigt und beidseitig des Schlittens angeordnet sind.

FIG.1

FIG. 2

FIG. 3

FIG. 4

FIG. 5

FIG. 6

FIG. 6'

0 008 981

FIG. 7

7

FIG. 8ₐ

FIG. 8_b

FIG.9

FIG.10

FIG.11a

FIG.11b